# EUROPÄISCHE PATENTSCHRIFT

(11) **EP 0 694 002 B1**
(45) Veröffentlichungstag und Bekanntmachung des Hinweises auf die Patenterteilung: **27.12.1996**
(21) Anmeldenummer: 94912452.3
(22) Anmeldetag: 13.04.1994
(51) Int. Cl.: B60R 21/00

(54) **STEUERSCHALTUNG FÜR ZÜNDPILLEN UMFASSENDE ZÜNDKREISE**
CONTROL CIRCUIT FOR FIRING SYSTEMS COMPRISING FIRING CAPS
CIRCUIT DE COMMANDE POUR CIRCUITS D'AMOR AGE COMPORTANT DES AMORCES

(30) Priorität: 22.04.1993 DE 4313124
(43) Veröffentlichungstag der Anmeldung: 31.01.1996
(73) Patentinhaber: ROBERT BOSCH GMBH, 70442 Stuttgart (DE)
(72) Erfinder: SCHUMACHER, Hartmut, D-71691 Freiberg (DE); OSWALD, Klaus, D-73666 Baltmannsweiler (DE); HENNE, Ralf, D-74343 Sachsenheim (DE)
(86) Internationale Anmeldenummer: DE9400410
(87) Internationale Veröffentlichungsnummer: WO9423971

(56) Entgegenhaltungen:
- EP-A- 0 502 608
- DE-U- 9 012 215

## Beschreibung

### Stand der Technik

Die Erfindung betrifft eine Steuerschaltung für Zündpillen umfassende Zündkreise nach dem Oberbegriff des Anspruchs 1.

Steuerschaltungen der gattungsgemäßen Art die beispielsweise aus EP-A-0 502608 bekannt sind, werden im Zusammenhang mit Sicherheitseinrichtungen für Fahrzeuginsassen, wie beispielsweise Airbag und/oder Gurtstraffer, eingesetzt. Sie dienen der Ansteuerung von Zündpillen, die eine Treibladung zünden, welche die zum Aufblasen des Airbag erforderlichen Gasmengen erzeugt. Unter einer Zündpille versteht man ein Zündelement, das durch Stromfluß aufheizbar ist und das demzufolge die für das Anzünden einer Zündladung notwendige Temperatur erzeugt. Die Zündpille bildet damit das erste Glied einer elektrisch-pyrotechnischen Zündkette, die das Aufblasen des Airbag ermöglicht. Bei einem pyrotechnischen Gurtstraffer zündet die Zündpille eine Treibladung, die eine den Sicherheitsgurt aufnehmende Spule in schnelle Umdrehungen versetzt und damit Gurtlose verhindert.

### Vorteile der Erfindung

Gegenüber herkömmlichen Endstufen mit einer in Gegentaktschaltung ausgeführten Treiberstufe zeichnet sich die vorgeschlagene Steuerschaltung durch einen vergleichsweise einfachen Schaltungsaufbau aus, da nur noch eine einzige Treiberstufe vorgesehen ist. Dennoch kann jede der von der Treiberstufe angesteuerten Endstufen unabhängig voneinander angesteuert werden.

Ein weiterer Nachteil der bekannten, MOS-Feldeffekttransistoren verwendenden Endstufen ist die Zerstörung der Treiberschaltung bei einem Kurzschluß zwischen Drain und Gate des zugeordneten Endstufentransistors. Diese Fehlermöglichkeit wird durch die erfindungsgemäße Schaltungsanordnung vermieden. Insbesondere bei Zündkreisen, in denen ein Zündkreiskondensator in Reihe zu der Zündpille geschaltet ist, ermöglicht die vorgeschlagene Steuerschaltung sowohl die Überwachung des Zündpillenwiderstandes als auch der Zündkreiskapazität. Speziell bei der Messung des Widerstandswertes ist es notwendig, daß die Endstufen möglichst schnell durchgeschaltet und wieder gesperrt werden können, um eine Verfälschung der Messung beim Durchlaufen des Übergangsbereiches zu verhindern. Auch dies wird mit der vorgeschlagenen Steuerschaltung erreicht.

Der Abschaltvorgang der Transistoren T2, T3 der Endstufe wird durch die vorgeschlagene Steuerschaltung stark beschleunigt. So sorgen die zwischen den Gate-Anschlüssen der Transistoren T2, T3 und dem Basisanschluß des Transistors T1 geschalteten RC-Kombinationen R1, C1 bzw. R2, C2 dafür, daß der Abschaltvorgang nur etwa 100 Nanosekunden in Anspruch nimmt. Im Vergleich dazu wäre der Abschaltvorgang ohne diese RC-Kombinationen erst nach ca. 2 Mikrosekunden beendet. Dadurch wird die Meßgenauigkeit der Zündkreisüberwachungen, vor allem bei großen Temperaturschwankungen, wie sie bei Fahrzeugen auftreten, um ein Vielfaches verbessert.

Der Einschaltvorgang wird ebenfalls beschleunigt, was zu einer weiteren Genauigkeitssteigerung führt. Mit der vorgeschlagenen Steuerschaltung können Ströme von einigen Ampere innerhalb von rund 200 Nanosekunden ein- und ausgeschaltet werden.

Diese Vorteile werden mit einem vergleichsweise geringen Bauteileaufwand erzielt, da anstelle eingesparten Treiberstufe lediglich wenige passive Bauelemente, nämlich R1, C1 und R2, C2 in der Schaltungsanordnung vorgesehen werden müssen.

Weiterhin bleibt die Ansteuerung jeder Endstufe T2, T3 unabhängig von der Funktion der anderen Endstufe. Dies wäre bei einer Lösung mit einer gemeinsamen Gegentakt-Treiberstufe für beide Endstufen nicht der Fall.

Schließlich kann auch ein Kurzschluß der Transistoren T2, T3 aufgrund einer Widerstandsmessung erkannt und zur Anzeige gebracht werden.

### Zeichnung

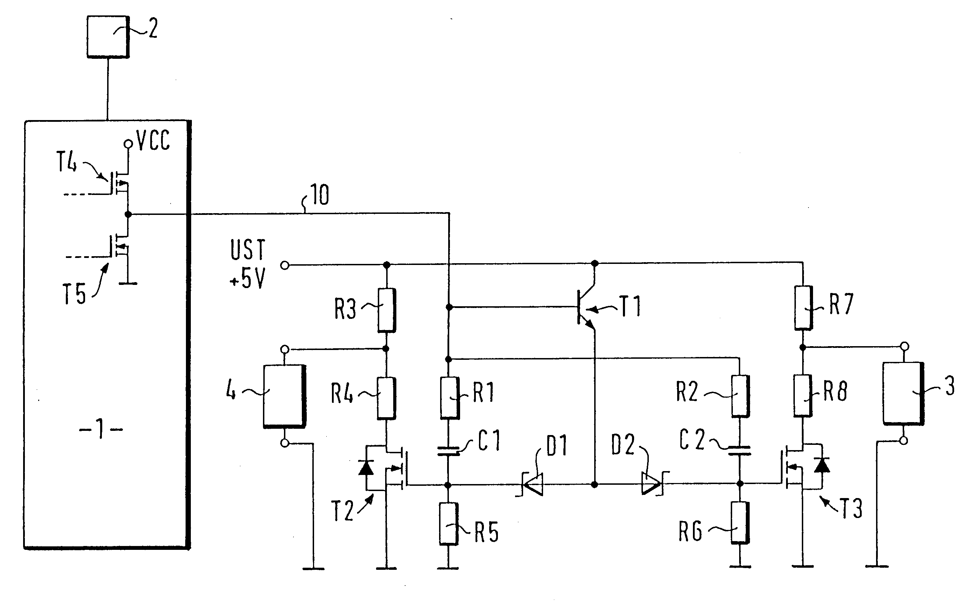

Ein Ausführungsbeispiel der Erfindung wird nachfolgend anhand der Zeichnung näher erläutert, die einen schematisierten Stromlaufplan der Steuerschaltung darstellt.

### Beschreibung des Ausführungsbeispiels

In der Figur ist mit Bezugsziffer 1 ein Controller bezeichnet, dessen Ausgangsport durch eine schematisch angedeutete Gegentaktendstufe mit den Transistoren T4 und T5 dargestellt ist. Mit dem Controller 1 in Wirkverbindung steht ein Sensor 2, der auf das Fahrzeug einwirkende Beschleunigungen erfaßt, die von dem Controller 1 ausgewertet werden. Mit der Gegentaktendstufe T4, T5 (Ausgangsport des Controllers 1) ist eine Ansteuerleitung 10 verbunden, die an den Basisanschluß eines als Treiberstufe vorgesehenen Transistors T1 führt. Der Kollektoranschluß des Transistors T1 ist mit dem Pluspol einer stabilisierten Spannungsquelle, im vorliegenden Fall +5 V, verbunden. Der Emitteranschluß des Transistors T1 ist mit dem Anodenanschluß der Dioden D1 und D2 verbunden, bei denen es sich insbesondere um Schottkydioden handelt. Der Kathodenanschluß der Diode D1 ist mit dem Gateanschluß eines ersten Endstufentransistors T2 verbunden. Zwischen den Gateanschluß des Transistors T2 und Masse ist ein Widerstand R5 geschaltet. Der Basisanschluß des Transistors T1 der Treiberstufe und der Gateanschluß des Transistors T2 der ersten Endstufe sind über die Serienschaltung eines Widerstands R1 und eines Kondensators C1 miteinander verbunden. Der Sourceanschluß des Transistors T2 ist mit Masse verbunden. Der Drainanschluß des Transistors T2 ist über die Serienschaltung der Widerstände R3, R4 mit dem positiven Pol der Betriebsspannung UST verbunden. Ein erster Zündkreis 4 liegt zwischen dem Verbindungspunkt der Widerstände R3, R4 und dem Masseanschluß. Der Kathodenanschluß der zweiten Diode D2 ist mit dem Gateanschluß des Transistors T3 der zweiten Endstufe verbunden. Zwischen dem Gateanschluß und dem Masseanschluß ist der Widerstand R6 geschaltet. Der Gateanschluß des Transistors T3 und der Basisanschluß des Transistors T1 sind über die Serienschaltung eines Widerstandes R2 und eines Kondensators C2 miteinander verbunden. Der Sourceanschluß des Transistors T3 ist mit Masse verbunden, während sein Drainanschluß über die Serienschaltung der Widerstände R8, R7 mit dem positiven Pol der stabilisierten Spannung UST verbunden ist. Zwischen dem Verbindungspunkt der Widerstände R7, und R8 und dem Masseanschluß ist ein zweiter Zündkreis 3 geschaltet.

Zum Einschalten der Transistoren T2, T3 der Endstufen wird die Ansteuerleitung 10 des Controllers 1 auf High-Potential gelegt. Dadurch wird Transistor T1 der Treiberstufe durchgeschaltet, so daß über ihn und die Dioden D1, D2 kurzzeitig ein großer Strom in die Gate-Elektroden der Transistoren T2, T3 fließen kann. Dadurch werden die Gate-Source-Kapazitäten sehr schnell aufgeladen. Infolgedessen werden die Transistoren T2, T3 der Endstufen innerhalb weniger Nanosekunden vollkommen durchgesteuert und befinden sich demzufolge im Schaltbetrieb. Durch die Serienschaltungen R2, C1 bzw. R2, C2 wird dieser Einschaltvorgang noch unterstützt, da zusätzlich zum Strom des Transistors T1 der Treiberstufe auch noch die Einschaltstromspitze auf der Steuerleitung 10 in die Gate-Anschlüsse der Transistoren T2, T3 geleitet wird. Um die Endstufen abzuschalten, wird die Steuerleitung 10 des Controllers 1 wieder auf Low-Potential gelegt. da der Transistor T1 der Treiberstufe in Kollektorschaltung betrieben wird, sperrt dieser sofort die Ansteuerspannung für die Transistoren T2, T3 der Endstufen. Die Gate-Source-Kapazitäten der Transistoren T2, T3 können sich über die RC-Kombinationen R1, C1 bzw. R2, C2 in die Gegentaktendstufe T4, T5 des Controllers 1 entladen. Dieser Entladevorgang geht sehr schnell vor sich, da die Steuerleitung 10 des Controllers 1 intern niederohmig nach Masse geschaltet ist. Üblicherweise haben derartige Controller-Anschlüsse eine relativ hohe Sinkstromkapazität und einen vergleichsweise geringen Widerstandswert R_{DSON} von 100 Ohm. Die Transistoren T2, T3 der Endstufen sperren durch diese Maßnahme innerhalb eines Zeitraums von 100 Nanosekunden, so daß der Übergangsbereich sehr schnell durchschritten wird. Die Unabhängigkeit der Ansteuerung der beiden Endstufentransistoren T2, T3 wird nicht beeinträchtigt. Hat zum Beispiel Transistor T3 der zweiten Endstufe einen Kurzschluß zwischen seinen Drain- und Gateanschlüssen, so wird zwar die Ansteuerung des Transistors T2 der ersten Endstufe verlangsamt; dies hat jedoch keine Auswirkung auf die Zündfähigkeit eines durch den Zündkreis 1 aktivierbaren Airbags. Sinngemäß gilt dies natürlich auch bei einem Kurzschluß in dem Transistor T2 der ersten Endstufe. Durch die Verlangsamung des Schaltvorgangs bei dem Endstufentransistor T2 wird eine Widerstandsmessung jedoch beeinflußt. Dadurch ergibt sich eine zusätzliche Möglichkeit, Fehler innerhalb der Endstufen zu erkennen.

## Patentansprüche

1. Steuerschaltung für Zündpillen umfassende Zündkreise, dadurch gekennzeichnet, daß für jeden Zündkreis (3, 4) eine unabhängig voneineinander ansteuerbare Endstufe mit je einem Transistor (T2, T3) vorgesehen ist, die von einer gemeinsamen Treiberstufe (T1) ansteuerbar sind.

2. Steuerschaltung nach Anspruch 1, dadurch gekennzeichnet, daß jeder Endstufe (T2, T3) eine RC-Kombination (R1, C1, R2, C2) zugeordnet ist.

3. Steuerschaltung nach einem der Ansprüche 1, 2, dadurch gekennzeichnet, daß jeder Endstufe (T2, T3) eine Diode (D1, D2) zugeordnet ist.

4. Steuerschaltung nach einem der Ansprüche 1 bis 3, dadurch gekennzeichnet, daß als Dioden (D1, D2) Schottky-Dioden vorgesehen sind.

5. Steuerschaltung nach einem der Ansprüche 1 bis 4, dadurch gekennzeichnet, daß die Widerstandswerte (R1, R2) und die Kapazitätswerte (C1, C2) der RC-Kombinationen (R1, C1, R2, C2) zwischen 50 Ohm und 1 kOhm, insbesondere 100 Ohm und zwischen 1 Nanofarad und 10 Nanofarad, insbesondere bei 5 Nanofarad liegen.

## Claims

1. Control circuit for firing circuits comprising firing caps, characterized in that an output stage with in each case one transistor (T2, T3) is provided for each firing circuit (3, 4), it being possible for the said output stages to be actuated independently of one another by a common driver stage (T1).

2. Control circuit according to Claim 1, characterized in that an RC combination (R1, C1, R2, C2) is assigned to each output stage (T2, T3).

3. Control circuit according to one of Claims 1 and 2, characterized in that a diode (D1, D2) is assigned to each output stage (T2, T3).

4. Control circuit according to one of Claims 1 to 3, characterized in that Schottky diodes are provided as diodes (D1, D2).

5. Control circuit according to one of Claims 1 to 4, characterized in that the resistance values (R1, R2) and the capacitance values (C1, C2) of the RC combinations (R1, C1, R2, C2) are between 50 ohm and 1 kohm, in particular 100 Ohm and between 1 nanofarad and 10 nanofarad, in particular 5 nanofarad.

## Revendications

1. Circuit de commande pour des circuits d'amorçage comportant des amorces,
caractérisé en ce que
pour chaque circuit d'amorçage (3, 4) il est prévu un étage de puissance commandé indépendamment des autres et ayant chaque fois un transistor (T2, T3) commandé en commun par un étage piloté (T1).

2. Circuit de commande selon la revendication 1,
caractérisé en ce que
chaque étage de puissance (T2, T3) comporte un ensemble RC (R1, C1, R2, C2).

3. Circuit de commande selon l'une des revendications 1, 2,
caractérisé en ce que
chaque étage de puissance (T2, T3) comporte une diode (D1, D2).

4. Circuit de commande selon l'une des revendications 1 à 3,
caractérisé en ce que
les diodes (D1, D2) sont des diodes Schottky.

5. Circuit de commande selon l'une des revendications 1 à 4,
caractérisé en ce que
les valeurs des résistances (R1, R2) et celles des capacités (C1, C2) des ensembles RC (R1, C1, R2, C2) sont comprises entre 50 Ohm et 1 kOhm et notamment 100 Ohm, et entre 1 Nanofarad et 10 Nanofarad et notamment 5 Nanofarad.
